(19) **Europäisches Patentamt European Patent Office Office européen des brevets**

(11) **EP 4 583 012 A1**

(12) **EUROPEAN PATENT APPLICATION**

(43) Date of publication:
09.07.2025 Bulletin 2025/28

(21) Application number: 24305019.2

(22) Date of filing: 05.01.2024

(51) International Patent Classification (IPC):
*G06N 10/60* (2022.01)     *G06N 10/40* (2022.01)

(52) Cooperative Patent Classification (CPC):
**G06N 10/60; G06N 10/40;** G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Alice & Bob**
**75015 Paris (FR)**

(72) Inventors:
• **STEVENS, Jeremy**
**75015 Paris (FR)**
• **GUILMIN, Pierre**
**75015 Paris (FR)**
• **DEVANZ, Louise**
**75015 Paris (FR)**

(74) Representative: **Cabinet Netter**
**36, avenue Hoche**
**75008 Paris (FR)**

(54) **DEVICE AND METHOD FOR CALIBRATING A CONTROL UNIT OF A QUANTUM SYSTEM**

(57)     The invention relates to a device (1) and a method for performing an online calibration of the control unit of a quantum system.

The device (1) is arranged to receive data representing a set of respective initial values of n operating parameters of the control unit on which the dynamics of the quantum system depends, a loss function and a non-zero natural number p less than n. A calculator (7) is arranged to determine the p eigenvectors corresponding respectively to the p largest absolute eigenvalues of the Hessian of the loss function at the initial values of the n operating parameters, and an optimizer (9) is arranged to determine a set of respective final values of the n operating parameters by optimizing the loss function in a vicinity of the set of initial values explored by linearly combining the p eigenvectors.

FIG. 7

Processed by Luminess, 75001 PARIS (FR)

**Description**

The field of the invention relates to the calibration of a control unit of a quantum system.

Quantum optimal control aims to determine optimal strategies for manipulating quantum systems to achieve specific objectives. In scenarios such as superconducting circuits, where microwave pulses act as controls, the goal is typically to prepare target quantum states or perform desired unitaries. The ideal would be to optimize the controls on the system itself. Unfortunately, this is extremely difficult due to unavoidable experimental noise, the uninformed search of the large control parameter space and the time taken to extract information from the experiment. Thus, numerical optimization methods running offline are commonly employed to find working controls.

One such numerical method is the Gradient Ascent Pulse Engineering (GRAPE) algorithm, introduced by N. Kahneja et al. in "Optimal control of coupled spin dynamics: design of NMR pulse sequences by gradient ascent algorithms" (Journal of Magnetic Resonance, vol. 172, issue 2, February 2005, p. 296-305), which represents a significant leap in optimal quantum control. However, its effectiveness is critically dependent on possessing exhaustive knowledge of the controlled quantum system, which makes it complex to apply in practical scenarios where such detailed information may be unattainable. Indeed, the controls determined by GRAPE usually require in-situ adjustments for practical implementation. Pulses without online optimization prove effective only when the system's dynamics under control are exceptionally well-known.

The numerical model can be imperfect for multiple reasons. Uncontrollable external factors, such as interactions between system elements or magnetic fields, influence the dynamics, posing the challenge of controlling the system despite these perturbations. Additionally, imprecise characterization of the system parameters, because of experimental constraints for example, can lead to model imperfections.

The limitations of GRAPE become particularly evident when considering superconducting systems, where fluctuations and parameter uncertainties prevail. It must be added that N. Khaneja *et al.* (2005) propose, in the context of numerical magnetic resonance (NMR) spectroscopy, to use a total number of 6000 optimization parameters, a number which is unconceivable to optimize over with the experiment online.

To circumvent this, one idea is to find expressive controls determined by a low number of parameters. One such approach is the selective number-dependent arbitrary phase (SNAP) - displacement universal gate set proposed by S. Krastanov et al. in "Universal Control of an Oscillator with Dispersive Coupling to a Qubit" (Physical Review Applied 92, 0403031, 2015) and implemented for the first time by R. W. Heeres et al. in "Cavity State Manipulation Using Photon-Number Selective Phase Gates" (Physical Review Letters 115, 137002, 2015). One limitation however, as M. Kudra et al. show in the article "Robust preparation of Wigner-Negative States with Optimized SNAP-Displacement Sequences" (PRX Quantum 3, 030301, 2022), is that state preparation using this method is not satisfactory without further optimization of the individual pulses. Indeed, the SNAP and displacement gates have to be tuned individually here, despite using an experimental setup particularly protected from the external environment. On top of this, SNAP is not universally compatible with any quantum system and despite providing a universal control set does not guarantee a small number of individual pulses to achieve this.

Criticism can also be raised against brute force methods, i.e. optimizations which do not provide for any reduction in dimensionality between the offline implementation and the online implementation. For instance, the solutions described by M. Werninghaus et al. in the article "Leakage reduction in fast superconducting qubit gates via optimal control" (npj Quantum Information 7, 14, 2021) and by P. Cerfontaine et al. in "Closed-loop control of a GaAs-based single-triplet spin qubit with 99.5% gate fidelity and low leakage" (Nature Communications 11, 4144, 2020) each have an optimization time of days while the number of parameters - of the order of fifty - remains very modest.

A possible solution to circumvent this difficulty is to prepare offline controls that are sufficiently robust to possible online perturbations of the parameters of the quantum system. In this spirit, Andre R. R. Carvalho et al. describe, in the article "Error robust quantum logic optimization using a cloud quantum computer interface" (Physical Review Applied 15, 064054, 2021), the design of numerically-optimized pulses which present good robustness to variations in dephasing noise, instabilities in control amplitudes and crosstalk. However, this solution is very costly in terms of time and offline calculation resources, as the number of noisy Hamiltonian parameters increases. Furthermore, if the pulses chosen offline turn out to be incorrect during online implementation, it is not possible to correct the setup.

It was also envisaged to use a neural network capable of determining the pulse shapes so as to maximize a certain metric. In particular, this approach was explored by Y. Baum et al. in the article "Experimental Deep Reinforcement Learning for Error-Robust Gate-Set Design on a Superconducting Quantum Computer" (PRX Quantum 2, 040324, 2021) relating to a superconducting quantum computer operated by IBM and by V. V. Sivak et al. in the article "Real-time quantum error correction beyond break-even" (Nature 616, 50-55, 2023) relating to bosonic circuit QED systems. In both cases the parameter space is fairly small: dimension 16 on the IBM hardware and dimension 45 on the bosonic circuit. Yet, reinforcement learning is complicated to implement, and the black-box nature of the neural network does not allow the user to have access to the information that would enable her or him to further improve the pulse shapes.

The present invention seeks to improve the situation.

To this end, the Applicant proposes a device for calibrating a control unit of a quantum system.

The device comprises:

- a memory arranged to store data representing the dynamics of the quantum system, the dynamics depending at least on $n$ operating parameters of the control unit, the data including a set of respective initial values of the $n$ operating parameters,

the memory being further arranged to store data representing a loss function and a non-zero natural integer $p$ less than $n$, the loss function depending on: i) at least one target operating attribute to be reached by the quantum system and/or at least one target operating attribute to be reached by the control unit whilst controlling the quantum system; and ii) the $n$ operating parameters,

- a calculator arranged to determine the $p$ eigenvectors corresponding respectively to the $p$ largest absolute eigenvalues of the Hessian of the loss function at the initial values of the $n$ operating parameters, and

- an optimizer arranged to determine a set of respective final values of the $n$ operating parameters by optimizing the loss function in a vicinity of the set of respective initial values of the $n$ operating parameters explored by linearly combining the $p$ eigenvectors.

The device is arranged to receive input data representing a set of respective initial values of $n$ operating parameters of a control unit on which the dynamics of a quantum system depends, a loss function and a non-zero natural number $p$ less than $n$, the loss function depending on: i) at least one target operating attribute to be reached by the quantum system and/or at least one target operating attribute to be reached by the control unit whilst controlling the quantum system; and ii) the $n$ operating parameters, to store the input data in the memory, to determine output data representing a set of respective final values of the $n$ operating parameters to be set for calibrating the control unit of the quantum system, and to return the output data.

According to one or more embodiments, the optimizer is arranged to determine a set of respective final values of the $n$ operating parameters by tuning $p$ weighting coefficients to optimize the loss function, the $p$ weighting coefficients parametrically varying the $n$ operating parameters as follows :

$$\theta = \tilde{\theta}_{\text{init}} + \sum_{j=1}^{p} \alpha_j v_j$$

where: - $\theta = [\theta_1, ..., \theta_n]$ is a vector of the $n$ operating parameters $\theta_i$,

- $\tilde{\theta}_{\text{init}} = [\tilde{\theta}_{\text{init},1}, ... , \tilde{\theta}_{\text{init},n}]$ is a vector of the respective initial values $\tilde{\theta}_{\text{init},i}$,
- $\alpha_j$ is the j-th weighting coefficient, and
- $v_j$ is the j-th eigenvector of the $p$ eigenvectors.

According to one or more embodiments, the calculator is arranged to calculate the Hessian of the loss function at the initial values of the $n$ operating parameters and to thereby determine the $p$ eigenvectors corresponding respectively to the $p$ largest absolute eigenvalues of the Hessian.

According to one or more embodiments, the device is arranged to return the output data at least by setting the $n$ operating parameters of the control unit to the respective final values.

According to one or more embodiments, the memory is arranged to receive input data representing a set of respective initial values of $n$ operating parameters on which the dynamics of a density operator of the quantum system governed by a Lindblad master equation depends.

According to one or more embodiments, the control unit controlling the quantum system with at least one control signal over a period a time, the memory is arranged to receive input data representing a set of respective initial values of $n$ operating parameters of the control unit on which the dynamics of the quantum system depends and of which at least part corresponds to a sampling of the control signal over the period of time.

According to one or more embodiments, the memory is arranged to receive input data representing a loss function depending on a target quantum state or a target quantum unitary to be reached by the quantum system and the $n$ operating parameters.

According to one or more embodiments, the quantum system comprising one or more cat qubit resonators each hosting a respective cat qubit, the target quantum state is a combination of one or more respective cat states of the one or more cat qubits to prepare.

According to one or more embodiments, the quantum system comprising one or more cat qubit resonators each hosting a respective cat qubit in a cat state, the target quantum unitary is a quantum gate on individual ones of the cat states or a quantum gate between a plurality of cat states.

According to one or more embodiments, the memory is arranged to receive input data representing a set of respective initial values determined by applying a gradient descent to a loss function depending on: i) at least one target operating attribute to be reached by the quantum system and/or at least one target operating attribute to be reached by the control unit whilst controlling the quantum system; and ii) $n$ operating parameters of the control unit on which the dynamics of the quantum system depends.

According to one or more embodiments, the memory is arranged to receive input data representing a set of respective initial values corresponding to the respective current values of $n$ operating parameters on which the dynamics of the quantum system depends.

The Applicant also proposes a computer-implemented method for calibrating a control unit of a quantum system.

The method comprises the following operations:

a) receiving input data representing a set of respective initial values of $n$ operating parameters of the control unit on which the dynamics of the quantum system depends, a loss function and a non-zero natural number $p$ less than $n$, the loss function depending on: i) at least one target operating attribute to be reached by the quantum system and/or at least one target operating attribute to be reached by the control unit whilst controlling the quantum system; and ii) the $n$ operating parameters,

b) determining the $p$ eigenvectors corresponding respectively to the $p$ largest absolute eigenvalues of the Hessian of the loss function at the initial values of the $n$ operating parameters,

c) determining output data representing a set of respective final values of the $n$ operating parameters by optimizing the loss function in a vicinity of the set of respective initial values of the $n$ operating parameters explored by linearly combining the $p$ eigenvectors, and

d) returning the output data.

According to one or more embodiments, the computer-implemented method further comprises the following preliminary operation: applying a gradient descent to the loss function for determining the set of respective initial values.

According to one or more embodiments, the computer-implemented method further comprises at least one additional implementation of operations a), b), c) and d), the set of respective initial values of the $n$ operating parameters used in operation a) of the additional implementation being the set of respective final values of the $n$ operating parameters determined in operation c) of the preceding implementation.

Finally, the Applicant proposes a computer program comprising instructions whose execution, by at least one processor, results in the implementation of the computer-implemented method mentioned above.

Other features and advantages of the invention will become apparent from the following description provided for indicative and non-limiting purposes, with reference to the accompanying drawings, wherein:

- Figure 1 illustrates a quantum system coupled to a transmon qubit,

- Figures 2-4 partially illustrates various example implementations of the quantum system and the transmon qubit of figure 1,

- Figure 5 illustrates the respective time evolutions of the memory and transmon drive terms determined using a known gradient descent optimization,

- Figure 6 illustrates a device for calibrating a control unit of a quantum system according to the invention,

- Figure 7 illustrates a method for calibrating a control unit of a quantum system according to the invention,

- Figure 8 illustrates the largest absolute eigenvalues of the Hessian of a loss function, and

- Figure 9 illustrates a comparison between a gradient descent optimization and the method of figure 7 for a particular case in which the Hamiltonian parameters were wrongly estimated during offline modeling.

The drawings and the following description are comprised for the most part of positive and well-defined features. As a result, they are not only useful in understanding the invention, but they can also be used to contribute to its definition, should the need arise.

## A. Concrete example of a quantum system to be controlled

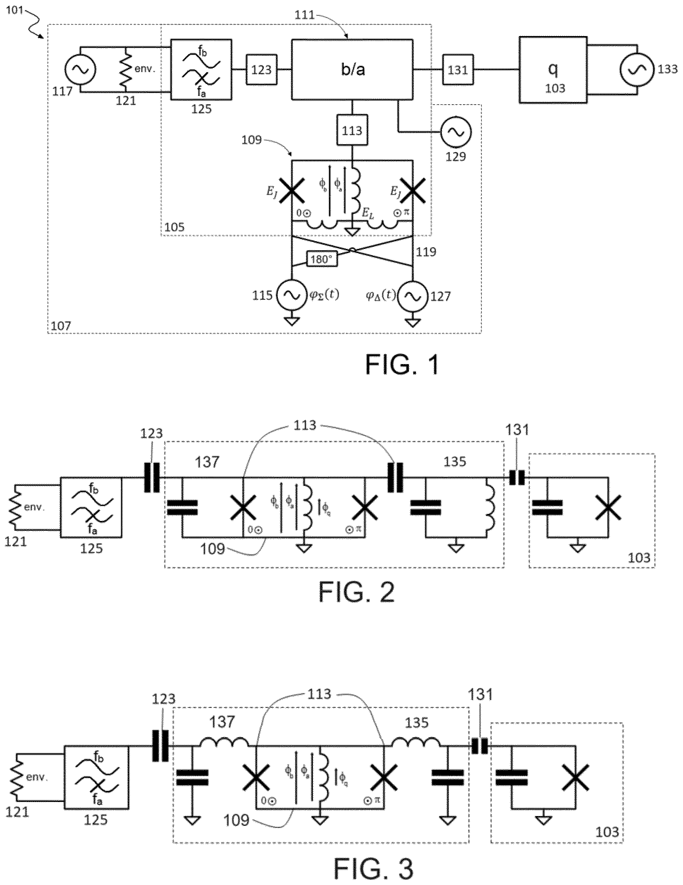

Figure 1 illustrates a quantum system 101 coupled to a transmon qubit 103.

The particular context of such a layout is explained below through prerequisites relating to cat qubits and their stabilization, a detailed description of figure 1 and example implementations and, finally, a presentation of a possible offline calibration.

### A.1 Prerequisites

### A1.1 Cat qubits

Generally speaking, superconducting qubits can be implemented as two-level systems of superconducting electronic circuits. Such qubits can be stored in bosonic modes and thus form a particular class of superconducting qubits known as bosonic qubits.

So far, the Applicant's work has been generally concerned with the stabilization of cat qubits, bosonic qubits defined by a quantum manifold spanned by the superpositions of two coherent states, which are quasi-classical states of the bosonic mode.

The possibility of realizing such a qubit has been demonstrated by R. Lescanne et al. in "Exponential suppression of bit-flips in a qubit encoded in an oscillator" (Nature Physics, 2020). The cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability. Specifically, this was achieved by using an asymmetrical threaded superconducting quantum interference device ("ATS") as a four-wave mixing non-linear element to engineer the 2-to-1 photon conversion.

R. Lescanne *et al.* (2020) thus demonstrated that the cat qubits can be stabilized with a non-linear conversion between two photons of a first mode a - also known as memory mode or cat qubit mode - that hosts the stabilized quantum manifold and one photon of a second mode b - also known as buffer mode - that is strongly dissipative.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

A.1.2 Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a four-wave mixing device - typically a Josephson junction or an ATS - to the cat qubit mode a and by engineering the Hamiltonian

$$H/\hbar = g_2(a^2 - \alpha^2)b^\dagger + \text{h.c.}$$

, where $b$ is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, $a$ is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \text{h.c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^\dagger)^2 - \alpha^2\right)$, where $\kappa_{SC}$ is the squeezed two-photon dissipation rate, $a$ is the photon annihilation operator of the memory mode a, $\alpha$ is a complex number defining the cat qubit, $r$ and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian

$$H/\hbar = g_{SC}((\cosh(r)a + \sinh(r)e^{i\theta}a^\dagger)^2 - \alpha^2)b^\dagger + \text{h.c.},$$ where $b$ is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^\dagger a - \alpha^2)b^\dagger + \text{h.c.}$, where $g_2$ is the amplitude of a pump at frequency $|2f_a - f_b|$, $a$ is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2 - \alpha^2)b^\dagger + \text{h. c.}$, where $b$ is the photon annihilation operator of the buffer mode b provided the mode frequencies verify substantially $2f_a = f_b$ and $g_2 < \kappa_b$ to which a drive of the buffer mode at frequency $f_b$ is added.

### A.2. Detailed description of figure 1

As mentioned above, figure 1 illustrates a quantum system 101 coupled to a transmon qubit 103.

The quantum system 101 is arranged to implement a parametric dissipative stabilization of a cat qubit.

The parametric dissipative stabilization relies on generating the following terms:

- $a^2b^\dagger + \text{h. c.}$ : this first term corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b. Such a pump is thus a two-photon pump.

- $\alpha^2b^\dagger + \text{h. c.}$: this second term requires the drive of the second mode b at a frequency $f_b$. Such a drive, referred to as buffer drive, combined with the previous conversion terms effectively becomes a two-photon drive.

To this end, the quantum system 101 comprises a non-linear superconducting quantum circuit 105 and a command circuit 107.

The non-linear superconducting quantum circuit 105 is arranged to make possible four-wave mixing between the first mode a and the second mode b. In the following, the first mode a is used as a memory hosting a cat qubit, while the second mode b is used as a buffer in between the cat qubit and the external environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular resonant frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The first mode a has a high-quality factor $Q_a$ while the second mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 105 is intended to be subject to microwave radiations delivered by the command circuit 107 in order to engineer various non-linear interactions between the first mode a and the second mode b. The frequency of each microwave radiation is tuned to select specific terms within the rotating-wave approximation.

The non-linear superconducting quantum circuit 105 comprises a non-linear element 109 and a linear microwave network 111.

The non-linear element 109 is arranged to engineer the first term $a^2b^\dagger + \text{h. c.}$ of the jump operator $L_2$ for stabilizing the cat qubit.

The non-linear element 109 is an ATS. It is known to the skilled person that an ATS can be used to engineer the 2-to-1 photon conversion, i.e. the first term $a^2b^\dagger$ of the jump operator $L_2$, in order to perform a parametric dissipative stabilization, as successfully shown by R. Lescanne *et al.* (2020). More particularly, such a 2-to-1 photon conversion between the first mode a and the second mode b is obtained by parametrically pumping the ATS at the frequency $f_p = |2f_a - f_b|$. Advantageously, the pump frequency satisfies $f_p \gg g_2$ to make this parametric pumping work as well as possible.

Contrary to the first implementations of this stabilization scheme proposed by Z. Leghtas *et al.* (2015) and S. Touzard *et al.* (2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

It is known to the skilled person that, when biased at its flux working point (0 - $\pi$ or conversely), the Hamiltonian $H_{ATS}$ of the ATS 109 has the following "sin-sin" form:

$$H_{ATS} = -2E_J \sin\big(\varphi_\Sigma(t)\big)\sin(\varphi) + \frac{E_L}{2}\big(\varphi - \varphi_\Delta(t)\big)^2$$

where $\varphi = \varphi_a(a + a^\dagger) + \varphi_b(b + b^\dagger)$ is the total superconducting phase difference across the ATS 109, $\varphi_a$ is the zero-point fluctuation of the phase of the first mode a across the ATS 109 and $\varphi_b$ is the zero-point fluctuation of the phase of the second mode b across the ATS 109, $E_J$ is the Josephson energy of the side junctions and $E_L$ is the inductive energy of a central inductance, $\varphi_\Sigma(t)$ corresponds to a common flux modulation of the two loops of the ATS 109 and $\varphi_\Delta(t)$ corresponds to a differential flux modulation of the two loops of the ATS 109. The former can be implemented by delivering microwave radiations through flux lines of the ATS 109 out of phase, the latter can be implemented by delivering microwave radiations through flux lines of the ATS 109 in phase.

Parametric pumping of the ATS 109 is typically done by pumping the common flux as pumping the differential flux merely displaces the modes coupled to the ATS 109. As an example, by pumping the common flux at the frequency $f_p = |2f_a - f_b|$, $\varphi_\Sigma(t) = \varepsilon_p\cos(2\pi f_p t)$, the non-linear resonant part of the Hamiltonian writes in the rotating frame:

$$H_{ATS} = \frac{E_J\epsilon_p\varphi_a^2\varphi_b}{2}\big(a^2 b^\dagger + \text{h.c.}\big)$$

which is typically the two-to-one photon exchange Hamiltonian needed to engineer the two-photon stabilization.

The linear microwave network 111 is arranged to be connected to the ATS 109 to provide the non-linear superconducting quantum circuit 105 with the first mode a and the second mode b having respective resonant frequencies $f_a$ and $f_b$. The first mode a and the second mode b "participate" in the non-linear element 7, which means that a portion or the entirety of the mode magnetic energy is stored in the ATS 109. Such a participation can be quantified by the zero-point fluctuation of the superconducting phase across the Josephson junction, noted $\varphi_a$ for the first mode a and $\varphi_b$ for the second mode b.

In other words, the linear microwave network 111 is such that, when coupled via a linear coupler 113 to the ATS 109 which acts as an inductive element, the non-linear superconducting quantum circuit 105 has the first mode a and the second mode b at respective resonant frequencies $f_a$ and $f_b$ which participate in the ATS 109.

The command circuit 107 is arranged to deliver microwave radiations. To this end, as illustrated in figure 1, the command circuit 107 comprises at least a microwave source 115 and a microwave source 117.

The microwave source 115 is set-up to modulate the common flux in the ATS 109. More particularly, the microwave source 115 is arranged to deliver microwave radiations through flux lines of the ATS 109 out of phase to implement the common flux modulation $\varphi_\Sigma(t)$.

For this purpose, a microwave network 119 is used to split the radiation emitted by the microwave source 115 and apply it to each node of the ATS 109 with the correct phase. Alternatively, two different microwave sources could be used, each being simply coupled to a single node of the ATS 109 and their relative phase and amplitude being set so as to achieve the desired flux modulation.

The microwave source 115 is arranged to deliver microwave radiation to the ATS 109 at a frequency substantially equal to $|2f_a - f_b|$ to cause the non-linear superconducting quantum circuit 105 to perform the 2-to-1 photon conversion between the first mode a and the second mode b, and thus, as mentioned above, to engineer the first term $a^2 b^\dagger$ + h.c. of the jump operator $L_2$ for stabilizing the cat qubit. To convert this 2-to-1 photon conversion into two-photon dissipation, the second mode b is selectively coupled to a load 121 via a linear coupler 123 and a microwave filter 125 configured as a band pass filter with a frequency $f_b$.

Alternatively, the microwave filter 125 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 121.

Alternatively, it may be configured as a low-pass (respectively high-pass) filter if $f_a > f_b$ (resp $f_b > f_a$). In other embodiments, the microwave filter 125 can be omitted when coupling between the load 121 and substantially only the second mode b can be established. The skilled person thus understands that the first mode a has a high-quality factor while the second mode b has a low-quality factor.

The microwave source 117 is arranged to drive the second mode b by delivering microwave radiation to the linear microwave network 111 at a frequency substantially equal to the second resonant frequency $f_b$ in order to engineer the

second term $\alpha^2 b^\dagger$ + h. c. of the jump operator $L_2$ for stabilizing the cat qubit.

In the above, the load 121 can be seen as part of the command circuit 107 of figure 1, while the linear coupler 123 and the microwave filter 125 can be seen as part of the non-linear superconducting quantum circuit 103.

In figure 1, the command circuit 107 further comprises a microwave source 127 set-up to modulate the differential flux in the ATS 109 through the microwave network 119. More particularly, the microwave source 127 is arranged to deliver microwave radiations through flux lines of the ATS 109 in phase to implement the differential flux modulation $\varphi_\Delta(t)$.

It is to be noted that the microwave network 119 is used for convenience but can be omitted and the microwave source 127 could be applied directly to both nodes of the ATS 109, their relative phase and amplitude being set so as to achieve the desired flux modulation.

For the sake of completeness, it may also be noted that the microwave source 127 can be used, instead of the microwave source 117, to deliver microwave radiation at a frequency $f_b$ to the linear microwave network 111 to drive the second mode b.

Finally, the command circuit 107 further comprises a microwave source 129 arranged to drive the first mode a by delivering microwave radiation at the frequency $f_a$ to the linear microwave network 111.

Such a drive of the first mode a causes the non-linear superconducting quantum circuit 3 to engineer a

$$H_a/\hbar = \epsilon_a a + \text{h. c.}$$

Hamiltonian $H_a$ expressed as , where the complex rate $\varepsilon_a$ results from the amplitude and phase of the drive of the first mode a. Such a Hamiltonian $H_z$ can be involved in the measurement as such. When engineered in conjunction with the two-photon dissipation, the Hamiltonian $H_a$ allows through performing heterodyne or homodyne detection on the second mode b.

The transmon qubit 103 is arranged to be coupled to the quantum system 101 by a linear coupler 131. More particularly, the transmon qubit 103 is coupled to the memory, i.e. the part of the linear microwave network 111 that provides the non-linear superconducting quantum circuit 105 with the first mode a.

Indeed, as detailed in R. Lescanne *et al.* (2020), the transmon qubit 103 is intended to be also coupled to a readout resonator (absent from figure 1) which together enable to perform a cat qubit tomography, i.e. a Wigner tomography of the memory - also known as cat qubit resonator.

The linear coupler 131 is arranged such that the transmon qubit 103 slightly hybridizes with the quantum system 101 which leads to a small participation $\varphi_q$ of the transmon qubit 103 in the ATS 109. The linear coupler 304 can be capacitive, inductive, galvanic or mediated via a resonating bus coupler or an additional microwave network. The transmon qubit q provide the non-linear superconducting quantum circuit 105 with a third mode q having a resonant

frequency $f_q = \dfrac{\omega_q}{2\pi}$ , where $\omega_q$ is the angular resonant frequency of the mode q.

Furthermore, a microwave source 133 is arranged to drive the transmon qubit 103.

It must be noted that, over a timescale in the millisecond range, the transmon qubit 103 acquires a thermal excitation that shifts the memory frequency. Such random frequency shifts can cause bit-flip time saturation.

A.2.1 Various example implementations

Figures 2, 3 and 4 show several possible circuit implementations of the above-discussed layout of figure 1.

The microwave sources have been omitted for simplicity but are arranged in the same way as in figure 1 to run the circuit. The ATS 109 serves as a central reference point to which the rest of the components are connected. The filtering and environment of the second mode b are also present to this end.

In each of the example implementations, the linear microwave network 111 comprises a first resonant portion 135 and a second resonant portion 137 which are both coupled to the ATS 109. The first resonant portion 135 confers the first mode a having the resonant frequency $f_a$ to the non-linear superconducting quantum circuit 105 while the second resonant portion 137 confers the second mode b having the resonant frequency $f_b$ to the non-linear superconducting quantum circuit 105. In other words, the first resonant portion 135 corresponds to the memory while the second resonant portion 137 corresponds to the buffer.

In figure 2, the first resonant portion 135 includes an inductive element and a capacitive element forming together a parallel LC resonator strongly capacitively coupled to the ATS 109 while the second resonant portion 137 includes a capacitive element galvanically coupled to the ATS 109. The couplings to the ATS 109 form the linear coupler 113. The second resonant portion 137 is coupled to the environment by a capacitive element 123. Finally, a transmon qubit 103 including a capacitive element and a Josephson junction is weakly coupled to the first resonant portion 135 by a capacitive element 131. The weak coupling should be understood as the participation of the transmon qubit 103 in the ATS 109 is smaller than that of the first resonant portion 135.

In figure 3, the first resonant portion 135 and the second resonant portion 137 both include an inductive element and a capacitive element, each forming a series LC resonator strongly galvanically coupled to the ATS 109. The second resonant portion 137 is coupled to the environment by a capacitive element 123. Finally, similarly to figure 2, a transmon qubit 103 including a capacitive element and a Josephson junction is weakly coupled to the first resonant portion 135 by a capacitive element 131.

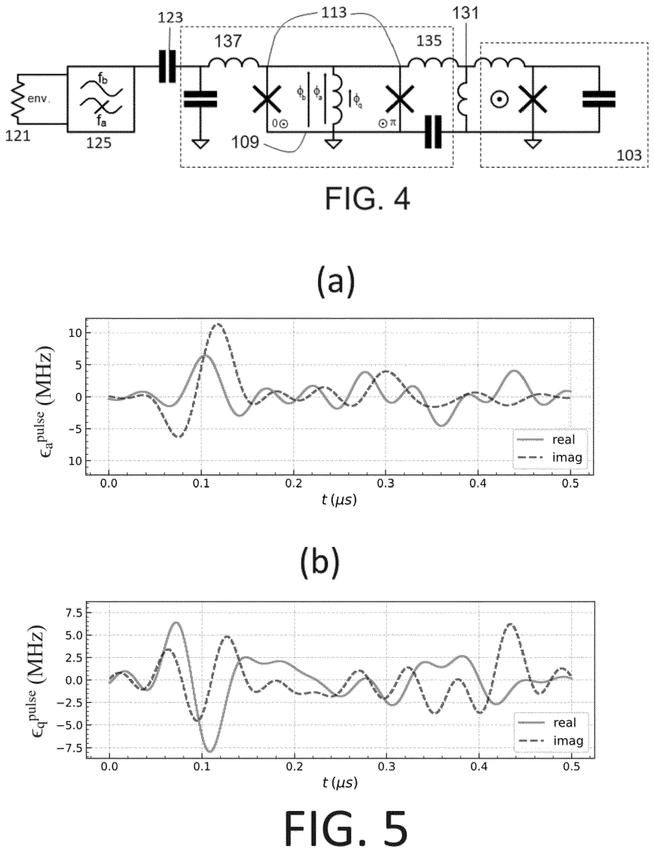

Finally, in figure 4, the first resonant portion 135 and the second resonant portion 137 are identical to those of figure 3. However, the transmon qubit 103 and its coupling to the first resonant portion 135 are different. The transmon qubit 103 is a fluxonium qubit including a capacitive element, a Josephson junction and an inductive element (which is typically made out of a chain of Josephson junctions) arranged in a loop through which is threaded a magnetic flux. This transmon qubit 103 is weakly inductively coupled to the inductive element of the series LC resonator corresponding to the first resonant portion 135 via a shared inductive portion 131.

A.3 Offline calibration

The setup formed by the quantum system 101 and the transmon qubit 103 is a good example of a superconducting circuit to manipulate in order to achieve specific objectives, i.e. the parametric dissipative stabilization of a cat qubit hosted in the memory and the implementation of a Wigner tomography thereof by means, *inter alia,* of the transmon qubit 103.

To this end, it is necessary to prepare upstream the calibration of such a setup: this is known as offline calibration.

In the following, the composite system including both the memory and the transmon qubit is considered. As detailed above, the memory and the transmon qubit are coupled to each other. Furthermore, the controls of this composite system are microwave pulses: the microwave source 129 is arranged to drive the first mode a while the microwave source 133 is arranged to drive the transmon qubit 103.

Such a composite system is a quantum system to be controlled using a control unit, which is here the assembly formed at least by the microwave source 129 and the microwave source 133. More particularly, this composite system is an open quantum system. It is also possible to consider, even if this is not the case in figure 1, that the microwave source 133 is also part of the command circuit 107, in which case it is simpler to consider that the control unit is the command circuit 107.

A.3.1 Open quantum system

An open quantum system is a quantum system that interacts with its external environment - also called *bath.* The interaction with the external environment significantly modifies the dynamics of a quantum system, i.e. its time evolution, and results in a loss of information.

Since a perfect isolation of quantum systems is impossible, the theory of open quantum system is an indispensable tool in practice to treat any quantum system.

The state of an open quantum system is described by a density operator - also called density matrix - generally noted $\rho$. The density operator $\rho$ best describes the state of the open quantum system and can represent both pure and mixed states.

Under appropriate assumptions - for instance the Born-Oppenheimer and Markov approximations - that are typically valid in the systems considered below, the time evolution of the density operator of an open quantum system can be expressed as a Lindblad master equation (also known as GKSL equation for "*Gorini-Kossakowski-Sudarshan-Lindblad equation*"). The Lindblad master equation conserves the interpretation of the density matrix as a valid quantum state since it preserves the trace and complete positivity of the density matrix. Such an equation can be written in the following form - or diagonal form:

$$\frac{d}{dt}\rho = \frac{-i}{\hbar}[H,\rho] + \sum_{\upsilon}\left(L_{\upsilon}\rho L_{\upsilon}^{\dagger} - \frac{1}{2}\left(L_{\upsilon}^{\dagger}L_{\upsilon}\rho + \rho L_{\upsilon}^{\dagger}L_{\upsilon}\right)\right)$$

where:

- h is the reduced Planck constant,
- i is the imaginary unit, with $i^2$ = -1,
- H is the Hamiltonian of the open quantum system, with $[H,\rho]$ = $H\rho$ - $\rho H$,
- $L_{\upsilon}$ is the $\upsilon$-th Lindblad operator - or jump operator, and
- $L_{\upsilon}^{\dagger}$ is the conjugate transpose of the $\upsilon$-th Lindblad operator.

The right-hand side of the Lindblad master equation can first be seen as a sum of a Hamiltonian part, which models the unitary part of the dynamics, corresponding to a closed evolution, and a dissipative part, which corresponds to the finite sum expressed with the Lindblad operators and models the interaction of the quantum system with its environment.

The Liouvillian $\mathcal{L}$ is often used to denote the right-hand side of the Lindblad master equation.

It should be noted that the Lindblad master equation is not the only way to model the dynamics of an open quantum system.

A.3.2 The transmon-memory coupling as a quantum system

Reference is made again below to the above-mentioned quantum system corresponding to the coupling of the memory and the transmon qubit 103.

The transmon qubit 103 is used, when coupled itself to a readout resonator, as a measurement apparatus to infer the state of the memory. The memory and the transmon qubit 103 are coupled via a cross-Kerr term $\chi_{qa}$; thus, the Hamiltonian of the quantum system has the following memory-transmon interaction term $H_{int}$:

$$H_{int}/\hbar = -\chi_{qa} a^\dagger a q^\dagger q$$

where :

- $a$ is the photon annihilation operator of the memory mode a, and
- $q$ is the photon annihilation operator of the transmon qubit 103.

The angular frequency $\omega_{trans}$ of the transmon qubit 103 shifts accordingly to the number $n$ of photons in the memory as follows:

$$\omega_{trans} = \omega_{trans,0} - n\chi_{qa}$$

where: - $\omega_{trans,0}$ is the frequency of the transmon qubit 103 when the memory is in the vacuum state.

Consequently, a spectroscopy of the transmon qubit 103 enables to measure the contribution of different Fock states in the memory, i.e. the number of photons in the memory.

The quantum system is controlled by the control unit including the microwave source 129 and the microwave source 133. The dynamics of the discussed quantum system is modeled by a Lindblad master equation which rely on the following Hamiltonian $H_0$ and Lindblad operators:

$$H_0/_\hbar = -\frac{\delta}{2}\left(q^\dagger\right)^2 q^2 - \chi_{qa} a^\dagger a q^\dagger q - \frac{K_{(4)}}{2}\left(a^\dagger\right)^2 a^2 + i\left(\epsilon_q^* q^\dagger - \epsilon_q q\right) + i\left(\epsilon_a^* a^\dagger - \epsilon_a a\right)$$

where: - $\delta$ is the transmon anharmonicity,

- $K_{(4)}$ is the self-Kerr (first order) term of the memory,
- $\varepsilon_q$ is a transmon drive term, i.e. complex number resulting from the amplitude and phase of the drive of the mode q, and
- $\varepsilon_a$ is a memory drive term, i.e. complex number resulting from the amplitude and phase of the drive of the first mode a.

The transmon drive term $\varepsilon_q$ is a time-dependent term generated by the microwave source 133 which is arranged to drive the transmon qubit 103. The memory drive term $\varepsilon_a$ is a time-dependent term generated by the microwave source 129 which is arranged to drive the memory.

$$L_a = \sqrt{\kappa_a}\, a$$

$$L_r = \sqrt{\gamma_1}\, q$$

$$L_{\varphi-q} = \sqrt{2\gamma_\varphi q^\dagger q}$$

$$L_{\varphi-a} = \sqrt{2\kappa_\varphi a^\dagger a}$$

where: - $L_a$ is the loss operator corresponding to the memory single photon loss rate $\kappa_a$,

- $L_r$ is the loss operator corresponding to the transmon relaxation decay rate $\gamma_1$,
- $L_{\varphi-q}$ is the loss operator corresponding to the transmon dephasing rate $\gamma_\varphi$, and
- $L_{\varphi-a}$ is the loss operator corresponding to the memory dephasing rate $\kappa_\varphi$.

The transmon relaxation decay rate $\gamma_1$ and the transmon dephasing rate $\gamma_\varphi$ are linked by the following formula:

$$\gamma_\varphi = \gamma_2 - \frac{\gamma_1}{2}$$

where: $\gamma_2$ is the transmon spin-echo decay rate.

The goal of the offline calibration is to prepare a Fock state $|2\rangle$ with two photons in the memory with the transmon qubit 103 ending in the ground state $|g\rangle$, starting from the memory in the vacuum state and the transmon qubit 103 in the ground state $|g\rangle$.

The target quantum state $\rho_{target}$ is therefore defined as follows:

$$\rho_{target} = |2\rangle\langle 2| \otimes |g\rangle\langle g|$$

where : $\otimes$ denotes the tensor product.

To this end, the microwave source 129 and the microwave source 133 must be calibrated.

As mentioned previously, the drive terms $\varepsilon_a$ and $\varepsilon_q$ are controls of the quantum system and correspond to microwave pulses delivered respectively by the microwave source 129 and the microwave source 133.

The question is therefore how to calibrate the microwave source 129 and the microwave source 133 over time to reach the target quantum state $\rho_{target}$.

For this purpose, a numerical quantum optimal control is used. A gradient descent optimization software is detailed hereinafter.

A.3.3 Gradient descent optimization software

First of all, it is necessary to model the quantum system. As previously explained, the above-described quantum system is an open quantum system whose time evolution can be described with a Lindblad master equation depending on a Hamiltonian and Lindblad operators.

For instance, for a driven lossy harmonic oscillator having an angular frequency $\omega$ and an annihilation operator $a$, the Hamiltonian $H$ presents a detuning term and a drive term $H/h = \omega a^\dagger a + \varepsilon(a + a^\dagger)$, where $\varepsilon$ is a real number resulting from the amplitude and phase of the drive of the lossy harmonic oscillator, and a single Lindblad operator $L = \sqrt{\kappa} a$ corresponding a single photon loss rate $\kappa$.

Therefore, the Lindblad master equation governing the dynamics of the lossy harmonic oscillator is the following:

$$\frac{d}{dt}\rho = \mathcal{L}(\rho) = -i[\omega a^\dagger a + \epsilon(a + a^\dagger), \rho] + D[\sqrt{\kappa}a](\rho)$$

with: $D[L](\rho) = L\rho L^\dagger - \frac{1}{2}(L^\dagger L\rho + \rho L^\dagger L)$

Then, the controls of the quantum system are parametrized with a $n$-dimensional parameter vector $\theta = [\theta_1, \dots, \theta_n]^T$, where $\theta_i$ is a real number for every $i \in [\![1, n]\!]$. Such a $n$-dimensional parameter vector $\theta$ characterizes the control

unit arranged to control the quantum system.

In the previous example, the drive term $\varepsilon$ is a time-dependent term and the single control of the lossy harmonic oscillator. Consequently, the parameterization of this drive term can be carried out by sampling it over the period of time over which the lossy harmonic oscillator must be driven. If we consider that the lossy harmonic oscillator must be driven over a time interval $]0; T]$, this time interval can be segmented into $n$ time sub-intervals as follows:

$$]0; T] = ]t_0; t_1] \cup ]t_1; t_2] \cup \ldots \cup ]t_{n-1}; t_n]$$

with: $t_0 = 0$ and $t_n = T$.

The value of the drive term $\varepsilon$ on each time sub-interval $]t_{i-1}; t_i]$ is then an operating parameter $\theta_i$ of the control unit. We thus parameterized the drive term $\varepsilon$ to obtain a $n$-dimensional parameter vector $\theta = [\theta_1, \ldots, \theta_n]^T$.

When the objective to be achieved is not trivial, the number of operating parameters of the control unit is chosen to be quite large. Choosing a high-dimensional parametrization ensures that the controls will be expressive enough. Typically, the number $n$ of operating parameters goes from 50 to 5000.

The above-mentioned objective is defined by a loss function $f_L$.

The loss function $f_L$ typically depends on one or more target operating attributes to be reached by the quantum system. More generally, the loss function can also depend on some intermediate stage of the dynamics.

In addition, the loss function $f_L$ depends on the $n$ operating parameters of the control unit that is arranged to control the quantum system.

For the sake of simplification, and without loss of generality, it is assumed hereinafter that the loss function $f_L$ depends on only one target operating attribute $X_{target}$ to be reached. In other words: $f_L = f_L(X_{target}, \theta)$.

Typically, the target operating attribute $X_{target}$ is a target quantum state $\rho_{target}$ or a target quantum unitary $U_{target}$ to be reached by the quantum system.

Referring to the previous example, a possible objective is to prepare a target quantum $\rho_{target}$ - for instance a Fock state with five photons $\rho_{target} = |5\rangle\langle5|$. In such a case, the following loss function $f_L$ can be built:

$$f_L(\rho_{target}, \theta) = 1 - \mathrm{F}(\rho_{target}, \rho(\theta))$$

where: F is the fidelity between two quantum states.

The fidelity is a known measure of mathematical distance between two quantum states, and more particularly between two density operators. The fidelity between two density operators $\rho$ and $\sigma$ is commonly defined as follows:

$$\mathrm{F}(\rho, \sigma) = (\mathrm{tr}\sqrt{\sqrt{\rho}\sigma\sqrt{\rho}})^2$$

Consequently, the previous loss function $f_L$ can be seen as a measure how different the quantum state $\rho(\theta)$ defined by the $n$-dimensional parameter vector $\theta$ and the target state $\rho_{target}$ are from each other. By minimizing $f_L$, we bring the experimental state closer to the target state.

As mentioned above, a different objective can also be to prepare a target quantum unitary $U_{target}$. Such a target quantum unitary $U_{target}$ can be defined as a mapping from a set of initial quantum states $\{\rho_1^i, \ldots, \rho_m^i\}$ to a set of respective target quantum states $\{\rho_1^t, \ldots, \rho_m^t\}$.

This mapping can be written as follows for every $k \in [\![1, m]\!]$:

$$\rho_k^t = U_{target}\rho_k^i U_{target}^\dagger$$

In such a case, the following loss function $f_L$ can be built:

$$f_L(U_{target}, \theta) = m - \sum_{k=1}^{m} \mathrm{F}(U_{target}\rho_k^i U_{target}^\dagger, U(\theta)\rho_k^i U(\theta)^\dagger)$$

Preparing a target quantum state or a target quantum unitary are common objectives. However, it is known to the skilled person that other objectives can be achieved and that other target operating attributes can be defined.

Finally, the $n$-dimensional parameter vector $\theta$ of the control unit is optimized in order to find a local minimum $\theta_{min}$ of the loss function $f_L$. Such a local minimum $\theta_{min}$ cancels the gradient of the loss function $f_L$:

$$\nabla f_L(\theta_{min}) = 0$$

with:

$$\nabla f_L(\theta) = \begin{bmatrix} \dfrac{\partial f_L}{\partial \theta_1}(\theta) \\ \vdots \\ \dfrac{\partial f_L}{\partial \theta_n}(\theta) \end{bmatrix}$$

The local minimum $\theta_{min}$ can be calculated by performing a gradient descent. The gradient can be computed analytically - for instance with the GRAPE algorithm described by N. Kahneja *et al.* (2005) - or numerically - for instance with automatic differentiation.

The gradient descent optimization is applied to the transmon-memory coupling controlled by the control unit, i.e. the combination of the microwave source 129 and the microwave source 133, hereinafter.

As a further generalization of the method, we note that the problem to solve does not need to be a dynamic control of the system nor does the loss function have to explicitly apply to a metric of the quantum system under control. An example of this is the optimization of the power consumption of the control electronics - which is the loss function in this case - at fixed bit-flip rate for a cat-qubit in the steady state. The parameters to optimize over are the amplitude of the drive and pump microwave signals necessary for stabilization using an ATS.

A.3.4 The gradient descent optimization software applied to the transmon-memory coupling

As a reminder, the Hamiltonian $H_0$ of the quantum system formed together by the memory and the transmon qubit 103 is the following:

$$H_0/_\hbar = -\frac{\delta}{2}\left(q^\dagger\right)^2 q^2 - \chi_{qa} a^\dagger a q^\dagger q - \frac{K_{(4)}}{2}\left(a^\dagger\right)^2 a^2 + i\left(\epsilon_q^* q^\dagger - \epsilon_q q\right) + i\left(\epsilon_a^* a^\dagger - \epsilon_a a\right)$$

First of all, all the physical parameters of the above Hamiltonian $H_0$ are measured experimentally. In the example developed here, the typical measured values of the transmon anharmonicity $\delta$, the cross-Kerr term $\chi_{qa}$ between the memory and the transmon qubit 103 and the self-Kerr (first order) term $K_{(4)}$ of the memory are the following:

$$\frac{\delta}{2\pi} = 282 \text{ MHz}$$

$$\frac{\chi_{qa}}{2\pi} = 2.81 \text{ MHz}$$

$$\frac{K_{(4)}}{2\pi} = 182 \text{ kHz}$$

The Lindblad operators $L_a$, $L_r$, $L_{\varphi\text{-}q}$ and $L_{\varphi\text{-}a}$ are set to 0.

The quantum system is driven by the microwave source 129, which is arranged to drive the memory, and by the microwave source 133, which is arranged to drive the transmon qubit 103; the microwave source 129 and the microwave source 133 forming together the control unit of the quantum system. The microwave source 129 and the microwave source 133 respectively generate the memory drive term $\varepsilon_a$ and the transmon drive term $\varepsilon_q$ which are both complex numbers and time-dependent terms.

At a given time t, each of the drive terms $\varepsilon_a$ and $\varepsilon_q$ can be written as follows:

$$\epsilon_a(t) = \epsilon_a^{real}(t) + i\epsilon_a^{imag}(t)$$

$$\epsilon_q(t) = \epsilon_q^{real}(t) + i\epsilon_q^{imag}(t)$$

The quantum system is thus controlled with two control signals emitted by the control unit over a period of time. In the example developed here, the period of time lasts 500 nanoseconds (ns).

The parameterization of the drive terms $\varepsilon_a$ and $\varepsilon_q$ can be carried out by sampling them over the period of time over which the quantum system must be driven. Here, the time interval ]0; 500] is segmented into 100 time sub-intervals as follows:

$$]0; 500] = \bigcup_{j=1}^{100} ]5(j-1); 5j]$$

Each time sub-interval ]5(j - 1); 5j] lasts 5 ns.

The respective real and imaginary parts of the two drive terms $\varepsilon_a$ and $\varepsilon_q$ on each of the 100 time sub-intervals ]5(j-1); 5j] makes it possible to obtain a $n$-dimensional parameter vector $\theta = [\theta_1, ..., \theta_n]^T$ characterizing the control unit, where $n = 400$. In other words, for every time sub-interval ]5(j - 1); 5j], four operating parameters of the control unit can be defined: $\epsilon_{a,j}^{real}, \epsilon_{a,j}^{imag}, \epsilon_{q,j}^{real}$ and $\epsilon_{q,j}^{imag}$.

In addition, due to experimental conditions which are specific to the example developed here and not to software optimization, the four operating parameters which result from the two drive terms $\varepsilon_a$ and $\varepsilon_q$ must satisfy the following constraint: $\epsilon_{a,j}^{real}, \epsilon_{a,j}^{imag}, \epsilon_{q,j}^{real}, \epsilon_{q,j}^{imag} \in [-10 \text{ MHz}; 10 \text{ MHz}]$ for every $j \in [\![1; 100]\!]$.

The $n$-dimensional parameter vector $\theta = [\theta_1, ..., \theta_n]^T$ is defined as follows:

$$\theta_i = \begin{cases} \epsilon_{a,i}^{real} & \text{if } i \in [\![1; 100]\!] \\ \epsilon_{a,i-100}^{imag} & \text{if } i \in [\![101; 200]\!] \\ \epsilon_{q,i-200}^{real} & \text{if } i \in [\![201; 300]\!] \\ \epsilon_{q,i-300}^{imag} & \text{if } i \in [\![301; 400]\!] \end{cases}$$

The microwave pulses to drive the quantum system are generated using an envelope $\varepsilon_{env}$ and a filter $F_{20 \text{ MHz}}$ having a bandwidth of 20 MHz:

$$\epsilon_a^{pulse}(t) = F_{20 \text{ MHz}}[(\epsilon_a^{real}(t) + i\epsilon_a^{imag}(t)) \cdot \epsilon_{env}(t)]$$

$$\epsilon_q^{pulse}(t) = F_{20 \text{ MHz}}[(\epsilon_q^{real}(t) + i\epsilon_q^{imag}(t)) \cdot \epsilon_{env}(t)]$$

The envelope function corresponds to a gaussian edged square pulse with a rise and fall time of 100 ns and a total duration of 500 ns. Once a microwave pulse has been generated, it is oversampled using interpolation to time bins of 1 ns for compatibility with the control electronics.

As a reminder, the goal of the offline calibration is to prepare a Fock state 12) with two photons in the memory with the transmon qubit 103 remaining in the ground state $|g\rangle$. The target quantum state $\rho_{target}$ is defined as follows: $\rho_{target} = |2\rangle \langle 2| \otimes |g\rangle\langle g|$.

The following loss function $f_L$ is defined:

$$f_L\big(\rho_{target}, \theta\big) = 1 - \mathrm{F}\Big(\rho_{target}, \rho(\theta)\Big) + N_a(\theta) + N_q(\theta)$$

where: - F is the fidelity between two quantum states,

- $N_a$ is the integral of the photon occupation probability in the memory over the period of time, and
- $N_q$ is the integral of the photon occupation probability in the transmon over the period of time.

The gradient descent optimization described in A.3.3 can now be implemented in order to determine a local minimum $\theta_{min}$ of this loss function $f_L$.

Figure 5 illustrates the microwave pulses $\epsilon_a^{pulse}$ and $\epsilon_q^{pulse}$ obtained using this gradient descent optimization. More particularly, diagram (a) corresponds to the microwave pulses $\epsilon_a^{pulse}$ emitted with the microwave source 129 to drive the memory while diagram (b) corresponds to the microwave pulses $\epsilon_q^{pulse}$ emitted with the microwave source 133 to drive the transmon qubit 103. The solid curve is the real part while the dotted curve is the imaginary part.

At the end of the period of time, the computed fidelity between the quantum state at the local minimum $\theta_{min}$ and the target quantum state $\rho_{target}$ is the following:

$$F\big(\rho_{target}, \rho(\theta_{min})\big) = 0.9798$$

The gradient descent optimization can be applied to more restricted cases than the quantum system presented in A.3.2 above. Typically, the gradient descent optimization may also apply to situations where the evolution is not described by a Liouvillian, for instance for continuously measured system described by a Stochastic master equation.

The gradient descent optimization is efficient numerically because one can compute the gradient of the loss function $f_L$ with respect to the $n$-dimensional parameter vector $\theta$. The gradient gives an informed way to modify the parameters $\theta_i$ to lower the loss function $f_L$, and thus the search in parameter space is much faster than gradient-free optimization such as brute force methods, as proposed by M. Werninghaus *et al.* (2021) and P. Cerfontaine *et al.* (2020).

In quantum systems such as superconducting circuits, the controls are often optimized with an inaccurate model of the true experimental system. It is thus necessary to refine in-situ the controls, to fine-tune them to the real system. However, experimentally, one does not have access to the gradient of the loss function $f_L$. It is thus impossible to optimize a few hundred or thousand parameters in a reasonable amount of time.

Consequently, one must re-optimize the controls with a smaller number of parameters. Contrary to the very principle of brute force methods, a reduction in dimensionality between the offline implementation and the online implementation has to be performed.

B. Online calibration

In the example developed in A.3.4 above, a fidelity value of 97.98% is attained using the gradient descent optimization. Such a fidelity value is satisfactory.

However, in the event of perturbations during experiments, when the real quantum system deviates from the model on which gradient descent optimization was implemented, another solution must be implemented in-situ. In other words, the offline calibration may be imperfect (e.g., some terms may be missing from the model, or some measured parameters may have an incorrect value).

B.1 Possible perturbations and losses

Still with reference to the concrete example described in detail throughout the previous part, possible perturbations and losses of the quantum system described in A.3.2 are presented below.

B.1.1 Perturbations of the Hamiltonian parameters

The cross-Kerr term $\chi_{qa}$ between the memory and the transmon and the self-Kerr (first order) term $K_{(4)}$ of the memory are arbitrarily increased by approximately 10% in order to perturb the Hamiltonian $H_0$:

$$\frac{\chi_{qa}}{2\pi} = 3.088 \text{ MHz}$$

$$\frac{K_{(4)}}{2\pi} = 200 \text{ kHz}$$

Conversely, the Lindblad operators $L_a$, $L_r$, $L_{\varphi\text{-}q}$ and $L_{\varphi\text{-}a}$ are kept unchanged and are thus all set to 0.

Such perturbations result in an experimental Hamiltonian $H_1$, and thus in an experimental Liouvillian $\mathcal{L}_1$ .

The quantum system is driven with the microwave pulses generated from the local minimum $\theta_{min}$ computed in A.3.4 and evolves under the Liouvillian $\mathcal{L}_1$ , which is entirely defined by the experimental Hamiltonian $H_1$.

At the end of the period of time, the computed fidelity between the quantum state at the local minimum $\theta_{min}$ and the target quantum state $\rho_{target}$ is the following:

$$F_{\mathcal{L}_1}\big(\rho_{target}, \rho(\theta_{min})\big) = 0.7804$$

The perturbations of the Hamiltonian parameters thus result in the drop in fidelity $\eta_F$:

$$\eta_F = 1 - \frac{F_{\mathcal{L}_1}\big(\rho_{target}, \rho(\theta_{min})\big)}{F\big(\rho_{target}, \rho(\theta_{min})\big)} = 1 - \frac{0.7804}{0.9798} = 20.4\%$$

B.1.2 Losses introduced into the Liouvillian

In A.3.4, the Lindblad operators $L_a$, $L_r$, $L_{\varphi\text{-}q}$ and $L_{\varphi\text{-}a}$ were set to 0.

Here, losses are introduced into the Liouvillian in a simulation implemented with the Quantum Toolbox in Python (QuTiP):

$$\frac{\kappa_a}{2\pi} = 0.007 \text{ kHz}$$

$$\frac{\gamma_1}{2\pi} = 3.3 \text{ kHz}$$

$$\frac{\gamma_2}{2\pi} = 6.2 \text{ kHz}$$

Conversely, the parameters of the Hamiltonian $H_0$ are kept unchanged.

Such losses result in an experimental Liouvillian $\mathcal{L}_2$ .

The quantum system is driven with the microwave pulses generated from the local minimum $\theta_{min}$ computed in A.3.4 and evolves under the Liouvillian $\mathcal{L}_2$ .

At the end of the period of time, the computed fidelity between the quantum state at the local minimum $\theta_{min}$ and the target quantum state $\rho_{target}$ is the following:

$$F_{\mathcal{L}_2}\big(\rho_{target}, \rho(\theta_{min})\big) = 0.8919$$

The losses introduced into the Liouvillian thus result in the drop in fidelity $\eta_F$:

$$\eta_F = 1 - \frac{F_{\mathcal{L}_2}\left(\rho_{target}, \rho(\theta_{min})\right)}{F\left(\rho_{target}, \rho(\theta_{min})\right)} = 1 - \frac{0.8919}{0.9798} = 9.0\%$$

B.1.3 Perturbations of the Hamiltonian parameters and losses introduced into the Liouvillian

The perturbations of the Hamiltonian parameters described in B.1.1 and the losses introduced into the Liouvillian described in B.1.2 are combined.

Such perturbations and losses result in an experimental Liouvillian $\mathcal{L}_3$.

The quantum system is driven with the microwave pulses generated from the local minimum $\theta_{min}$ computed in A.3.4 and evolves under the Liouvillian $\mathcal{L}_3$.

At the end of the period of time, the computed fidelity between the quantum state at the local minimum $\theta_{min}$ and the target quantum state $\rho_{target}$ is the following:

$$F_{\mathcal{L}_3}\left(\rho_{target}, \rho(\theta_{min})\right) = 0.7207$$

The perturbations of the Hamiltonian and the losses introduced in the Liouvillian thus result in the drop in fidelity $\eta_F$:

$$\eta_F = 1 - \frac{F_{\mathcal{L}_3}\left(\rho_{target}, \rho(\theta_{min})\right)}{F\left(\rho_{target}, \rho(\theta_{min})\right)} = 1 - \frac{0.7207}{0.9798} = 26.4\%$$

B.2 The proposed device and method

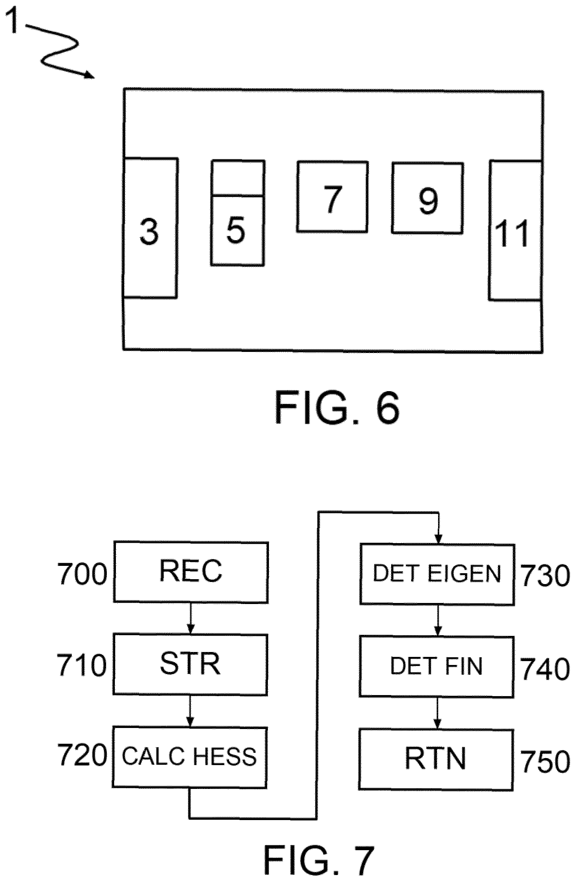

Figure 6 illustrates a device 1 for calibrating a control unit of a quantum system.

The device 1 is intended to be used in the context of an in-situ readjustment of the controls of a quantum system. Indeed, as previously explained, it is not possible to have perfect knowledge of a quantum system and, consequently, the modeling carried out upstream is incomplete and inaccurate. Thus, even if an offline calibration such as that described in A.3.3 theoretically makes it possible to achieve good proximity with the target operating attribute, it appears, as highlighted in the examples of perturbations and losses mentioned in B.1, that the controls need to be optimized again.

To this end, the device 1 comprises an input interface 3, a memory 5, a calculator 7, an optimizer 9 and an output interface 11.

The input interface 3 is arranged to receive input data relating to the open system to be controlled using the control unit.

The input interface 3 can take the form of a Human-Machine Interface (HMI) allowing a user to manually enter the input data. The input interface 3 can also function as a communication module capable of receiving input data via known communication technology, whether long-range technology (Internet) or short-range technology (Bluetooth, Wi-Fi, NFC).

More particularly, the input interface 3 is arranged to receive input data representing:

- a set of respective initial values $\tilde{\theta}_{init,i}$ of $n$ operating parameters $\theta_i$ on which the dynamics of the quantum system depends,

- a loss function $f_L$ depending on one or more target operating attributes to be reached by the quantum system and/or one or more target operating attributes to be reached by the control unit whilst controlling the quantum system, and the $n$ operating parameters $\theta_i$, and

- a non-zero natural number $p$ less than $n$.

The $n$ operating parameters $\theta_i$ of the control unit form together a n-dimensional parameter vector $\theta = [\theta_1, \ldots, \theta_n]^T$ while the respective initial values $\tilde{\theta}_{init,i}$ of the $n$ operating parameters $\theta_i$ form together a n-dimensional initial value vector $\tilde{\theta}_{init} = [\tilde{\theta}_{init,1}, \ldots, \tilde{\theta}_{init,n}]^T$.

Typically, the n-dimensional parameter vector $\theta$ describes the time evolution of a Lindblad master equation governing the dynamics of a density operator $\rho$ of the quantum system. However, as specified in A.3.1, the Lindblad master equation is not the only way to model the dynamics of a quantum system.

In addition, a target operating attribute $X_{target}$ to be reached by the quantum system is generally a target quantum state $\rho_{target}$ or a target quantum unitary $U_{target}$. However, other types of target operating attribute $X_{target}$ can be reached additionally or alternatively.

A reduction in dimensionality between the offline implementation and the online implementation has to be performed. Here, $n$ is the dimension of the parameter space at the offline calibration level, whereas $p$ is the dimension of the parameter space at the online calibration level. Typically, the number $n$ of operating parameters goes from 50 to 5000 while the number $p$ goes from 3 to 10.

The memory 5 is arranged to store the input data received by the input interface 3.

Furthermore, the memory 5 is arranged to store instructions whose execution, by the calculator 7 and the optimizer 9, results in the functioning of the device 1.

The memory 5 can be any data storage medium arranged to receive and store digital data, for instance a hard disk, a semiconductor disk or more generally any computer component dedicated to the storage of data on flash memory. The memory 5 can also be a random access memory (RAM) or a magneto-optical disk. A combination of several types of data storage can also be envisaged.

The calculator 7 is arranged to determine the $p$ eigenvectors corresponding respectively to the $p$ largest absolute eigenvalues of the Hessian of the loss function $f_L$ at the $n$-dimensional initial value vector $\tilde{\theta}_{init}$.

To this end, the calculator 7 is typically configured to calculate the Hessian of the loss function $f_L$ at the $n$-dimensional initial value vector $\tilde{\theta}_{init}$: $\nabla^2 f_L(\tilde{\theta}_{init})$; and then to derive the $p$ eigenvectors corresponding respectively to the $p$ largest absolute eigenvalues.

The Hessian of the loss function $f_L$ at the $n$-dimensional initial value vector $\tilde{\theta}_{init}$ is a $n \times n$ matrix whose coefficients $\nabla^2 f_{L i,j}(\tilde{\theta}_{init})$ are the following:

$$\nabla^2 f_{L_{i,j}}\left(\tilde{\theta}_{\mathrm{init}}\right) = \frac{\partial^2 f_L}{\partial \theta_i \partial \theta_j}\left(\tilde{\theta}_{\mathrm{init}}\right)$$

It is known to the skilled person that it is possible to estimate the Hessian via a number of known methods such as finite difference, BFGS-like approximation (BFGS stands for "*Broyden-Fletcher-Goldfarb-Shanno*") or automatic differentiation.

However, if the second derivatives of the loss function are not available or are very computationally difficult, e.g. due to a large number of parameters making computation of the Hessian intractable, then one can use a numerical algorithm that can directly calculate the $p$ eigenvectors corresponding to the largest $p$ eigenvalues without resorting to directly computing each coefficient in the Hessian. Examples include the Lanczos algorithm or the power iteration method.

The optimizer 9 is arranged to determine output data representing a set of respective final values $\tilde{\theta}_{final,i}$ of the $n$ operating parameters by optimizing the loss function $f_L$ in a vicinity of the set of respective initial values $\tilde{\theta}_{init,i}$ of the $n$ operating parameters $\theta_i$ explored by linearly combining the $p$ eigenvectors determined by the calculator 7.

The respective final values $\tilde{\theta}_{final,i}$ of the $n$ operating parameters $\theta_i$ form together a $n$-dimensional final value vector $\tilde{\theta}_{final} = [\tilde{\theta}_{final,1}, \ldots, \tilde{\theta}_{final,n}]^T$.

In figure 6, the calculator 7 and the optimizer 9 are represented as separate entities. However, such a distinction is functional and the respective functions of the calculator 7 and the optimizer 9 can both be performed by a processor.

This processor can be a microprocessor, a programmable logic device (PLD) or a dedicated chip of field programmable gate array (FPGA) or system on chip (SoC) type, a grid of computer resources, a microcontroller or any other specific form that has the necessary computing power to implement the method for calibrating a control unit of a quantum system described below with reference to figure 7. One or more of these elements can also be implemented in the form of specialized electronic circuits such as an application-specific integrated circuit (ASIC). A combination of processors and electronic circuits can also be envisaged.

Finally, the output interface 11 is arranged to return the output data determined by the optimizer 9.

The output interface 11 can take the form of a display device such as a screen to display the output data. The output interface 11 can also be connected to the quantum system to control it with the n-dimensional final value vector $\tilde{\theta}_{final}$.

A method for calibrating a control unit of a quantum system implemented by the device 1 will now be described with reference to figure 7.

In an operation 700, the input interface 3 receives input data representing a n-dimensional initial value vector $\tilde{\theta}_{init}$ of the $n$ operating parameters $\theta_i$ on which the dynamics of the quantum system depends, a loss function $f_L$ and a non-zero natural number $p$ less than $n$.

In an operation 710, the memory 5 stores the received input data.

Optionally, in an operation 720, the calculator 7 calculates the Hessian of the loss function $f_L$ at the initial values $\tilde{\theta}_{\text{init},i}$ of the $n$ operating parameters: $\nabla^2 f_L(\tilde{\theta}_{\text{init}})$.

In an operation 730, the calculator 7 determines the $p$ eigenvectors corresponding respectively to the $p$ largest absolute eigenvalues of the Hessian $\nabla^2 f_L(\tilde{\theta}_{\text{init}})$,

As explained above, it is possible to calculate such $p$ eigenvectors directly without having to estimate the Hessian; this is why the operation 720 above is optional.

In an operation 740, the optimizer 9 determines output data representing a n-dimensional final value vector $\tilde{\theta}_{\text{final}}$ of the $n$ operating parameters by optimizing the loss function $f_L$ in a vicinity of the n-dimensional initial value vector $\tilde{\theta}_{\text{init}}$ of the $n$ operating parameters $\theta_i$ explored by linearly combining the $p$ eigenvectors.

For instance, the optimizer 9 can be arranged to determine the n-dimensional final value vector $\tilde{\theta}_{\text{final}}$ of the $n$ operating parameters by tuning weighting coefficients to optimize the loss function $f_L$, the weighting coefficients parametrically varying the $n$ operating parameters as follows :

$$\theta = \tilde{\theta}_{\text{init}} + \sum_{j=1}^{p} \alpha_j v_j$$

where: - $\alpha_j$ is the j-th weighting coefficient, and

- $v_j$ is the j-th eigenvector of the $p$ eigenvectors; for instance, the eigenvectors are arranged so that $v_j$ corresponds to the j-th largest absolute eigenvalue.

Finally, in an operation 750, the output interface 11 returns the output data determined by the optimizer 9.

For instance, the output interface 11 returns the output data at least by setting the $n$ operating parameters $\theta_i$ to the respective final values $\tilde{\theta}_{\text{final},i}$. In addition or alternatively, the output interface 11 can also return the output data at least by displaying them on a screen.

The device 1 and the method described above make it possible to adjust in-situ the values of the $n$ operating parameters $\theta_i$ corresponding to the control signals of the quantum system by varying a reduced number $p$ of parameters, i.e. the weighting coefficients $\alpha_j$ of the eigenvectors $v_j$, which have the greatest impact on the loss function's value. With a few eigenvectors $v_j$ selected, it is possible to ingeniously explore the parameter space locally around the set of respective initial values $\tilde{\theta}_{\text{init},i}$ of the $n$ operating parameters $\theta_i$.

The method described above may be performed successive times by the device 1, such that the respective final values $\tilde{\theta}_{\text{final},i}$ provided by a first sequence of operations 700-750 may be used as the respective initial values $\tilde{\theta}_{\text{init},i}$ for a second sequence of operations 700-750. In this way, the proposed device 1 and method enable fine-tuning in further successive sequences of operations 700-750 should the behavior of the system shift as compared to how it was behaving during a previous sequence of operations 700-750 (e.g. due to un-anticipated fluctuations in the environment).

B.3 Application of the proposed device and method to the quantum system formed by the transmon-memory coupling

As explained in B.1, the experimental quantum system may be subject to perturbations and/or losses such that $\theta_{min}$ computed with the gradient descent optimization is no longer a local minimum of the updated experimental loss function.

In such a common case, the above-described device 1 and method can be used to determine a new local minimum $\tilde{\theta}_{\text{final}}$.

Concerning the input data of the device 1, it should be noted that it is advantageous to use the local minimum $\theta_{min}$ computed with the gradient descent optimization. In other words:

$$\tilde{\theta}_{\text{init}} = \theta_{min}$$

It should be noted that any parameter combination corresponding to a local minimum of the cost function could be used at this stage as long as the corresponding $p$ eigenvectors can be estimated.

It is also possible, if no offline calibration has been carried out, to otherwise choose the initial values $\tilde{\theta}_{\text{init},i}$ of the $n$ operating parameters $\theta_i$. For instance, the current physical values of the $n$ operating parameters $\theta_i$ at the start of the calibration of the control unit (i.e. those from a previous control sequence) may be taken as the initial values $\tilde{\theta}_{\text{init},i}$ to be used, which may have been arrived at using some other (e.g. online) calibration process. For instance, a previous control sequence may have comprised of a brute force online control optimization/calibration (e.g. applied a single time) or a reinforced-learning-based online optimization/calibration using a neural network. The results of such previous optimizations (or any other conceivable control optimizations) may provide the initial values $\tilde{\theta}_{\text{init},i}$ to be used, with the proposed device 1 and method enabling fine-tuning in further successive sequences of operations 700-750 should the behavior of the system shift as compared to how it was behaving during the previous brute force or reinforced-learning-based online optimization (e.g. due to un-anticipated fluctuations in the environment). As will be appreciated, regardless of precisely how the initial values $\tilde{\theta}_{\text{init},i}$ are produced, provided that initial values $\tilde{\theta}_{\text{init},i}$ are reasonably close to a local minimum, the proposed device 1 and method beneficially enable in-situ optimization of the values of the $n$ operating parameters $\theta_i$ corresponding to the control signals of the quantum system by only varying a reduced number $p$ of parameters.

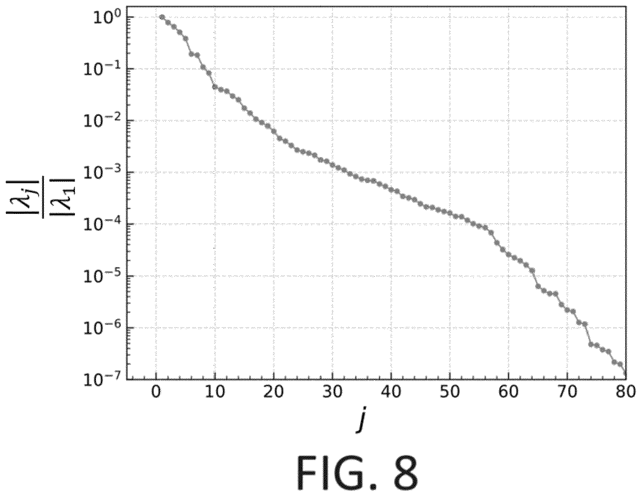

Figure 8 illustrates the absolute eigenvalues $|\lambda_j|$ of the Hessian of the loss function function $f_L$, sorted from the largest to the smallest, and normalized by the largest eigenvalue $|\lambda_1|$. In particular, figure 8 shows only the largest absolute eigenvalues, i.e. those above $10^{-7}|\lambda_1|$, which explains why the x-axis corresponding to the eigenvalue indices is truncated at 80. Ranking the absolute eigenvalues in descending order reveals a very steep slope. By way of illustration, the largest absolute eigenvalue is 1,000 times larger than the thirtieth largest absolute eigenvalue and almost 1,000,000 times larger than the seventieth largest absolute eigenvalue. This figure shows that it is sufficient to use a small number of eigenvectors, provided that their respective absolute eigenvalues are significantly larger than those of the remaining eigenvectors.

<u>B.3.1 Perturbations of the Hamiltonian parameters: the experimental Liouvillian</u> $\mathcal{L}_1$

The proposed device 1 and method for calibrating a control unit of a quantum system have been applied to the case of B.1.1 in which the cross-Kerr term $\chi_{qa}$ between the memory and the transmon and the self-Kerr (first order) term $K_{(4)}$ of the memory are arbitrarily increased by approximately 10% in order to perturb the Hamiltonian $H_0$ and in which the Lindblad operators $L_a$, $L_r$, $L_{\varphi\text{-}q}$ and $L_{\varphi\text{-}a}$ are all set to 0.

As a reminder, the perturbations of the Hamiltonian parameters result in the drop in fidelity $\eta_F$ = 20,4%.

It appears that the device 1 is able to counteract a wrong estimation of the Hamiltonian's parameters' values and that the proposed online calibration method enables to compensate for state infidelity due to the inaccuracy of the physical parameters used for an offline calibration.

Indeed, with the local minimum $\theta_{min}$ used as a starting point, the computed fidelity between the quantum state at the local minimum $\tilde{\theta}_{\text{final}}$ and the target quantum state $\rho_{target}$ is the following at the end of the period of time:

$$\mathrm{F}_{\mathcal{L}_1}\left(\rho_{target}, \rho(\tilde{\theta}_{\text{final}})\right) = 0.9294$$

The proposed online calibration method thus successfully recovers 15.2% of fidelity:

$$\frac{\mathrm{F}_{\mathcal{L}_1}\left(\rho_{target}, \rho(\tilde{\theta}_{\text{final}})\right) - \mathrm{F}_{\mathcal{L}_1}\left(\rho_{target}, \rho(\theta_{min})\right)}{\mathrm{F}\left(\rho_{target}, \rho(\theta_{min})\right)} = \frac{0.9294 - 0.7804}{0.9798} = 15.2\%$$

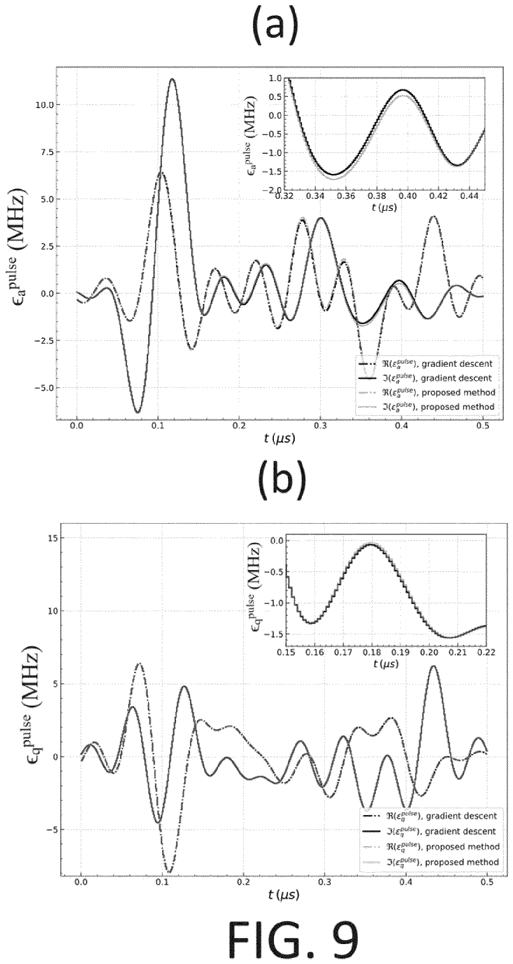

As illustrated in figure 9, the microwave pulses optimized respectively with gradient descent and the proposed online calibration method have similar amplitudes, except at specific times where they slightly differ. Here too, diagram (a) corresponds to the microwave pulses $\epsilon_a^{pulse}$ emitted with the microwave source 129 to drive the memory while diagram (b) corresponds to the microwave pulses $\epsilon_q^{pulse}$ emitted with the microwave source 133 to drive the transmon qubit 103. These non-intuitive changes have a strong effect on the state preparation fidelity and therefore highlight the benefits of doing in-situ tuning using the proposed online calibration method. In each of diagrams (a) and (b), an inset window corresponds to a zoom on the time interval over which the microwave pulses are most changed by the proposed method compared with gradient descent.

<u>B.3.2 Losses introduced into the Liouvillian: the experimental Liouvillian</u> $\mathcal{L}_2$

The proposed device 1 and method for calibrating a control unit of a quantum system have been applied to the case of B.1.2 in which the parameters of the Hamiltonian $H_0$ are kept unchanged and in which losses are introduced into the Liouvillian.

As a reminder, the losses introduced into the Liouvillian result in the drop in fidelity $\eta_F$ = 9.0%.

It appears that, in this very particular example, the proposed calibration method only provides small compensation.

Indeed, with the local minimum $\theta_{min}$ used as a starting point, the computed fidelity between the quantum state at the local minimum $\tilde{\theta}_{\text{final}}$ and the target quantum state $\rho_{target}$ is the following at the end of the period of time:

$$\mathrm{F}_{\mathcal{L}_2}\left(\rho_{target}, \rho(\tilde{\theta}_{\text{final}})\right) = 0.8944$$

The proposed online calibration method thus recovers 0.3% of fidelity:

$$\frac{\mathrm{F}_{\mathcal{L}_2}\left(\rho_{target}, \rho(\tilde{\theta}_{\text{final}})\right) - \mathrm{F}_{\mathcal{L}_2}\left(\rho_{target}, \rho(\theta_{min})\right)}{\mathrm{F}\left(\rho_{target}, \rho(\theta_{min})\right)} = \frac{0.8944 - 0.8919}{0.9798} = 0.3\%$$

B.3.3 Perturbations of the Hamiltonian parameters and losses introduced into the Liouvillian: the experimental Liouvillian $\mathcal{L}_3$

The proposed device 1 and method for calibrating a control unit of a quantum system have been applied to the case of B.1.3 in which the perturbations of the Hamiltonian parameters described in B.1.1 and the losses introduced into the Liouvillian described in B.1.2 are combined.

As a reminder, the perturbations of the Hamiltonian and the losses introduced in the Liouvillian thus result in the drop in fidelity $\eta_F$ = 26.4%.

It appears that the device 1 is able to counteract a wrong estimation of the Hamiltonian's parameters' values even in the presence of losses.

Indeed, with the local minimum $\theta_{min}$ used as a starting point, the computed fidelity between the quantum state at the local minimum $\tilde{\theta}_{\text{final}}$ and the target quantum state $\rho_{target}$ is the following at the end of the period of time:

$$\mathrm{F}_{\mathcal{L}_3}\left(\rho_{target}, \rho(\tilde{\theta}_{\text{final}})\right) = 0.8465$$

The proposed online calibration method thus successfully recovers 12.8% of fidelity:

$$\frac{\mathrm{F}_{\mathcal{L}_3}\left(\rho_{target}, \rho(\tilde{\theta}_{\text{final}})\right) - \mathrm{F}_{\mathcal{L}_3}\left(\rho_{target}, \rho(\theta_{min})\right)}{\mathrm{F}\left(\rho_{target}, \rho(\theta_{min})\right)} = \frac{0.8465 - 0.7207}{0.9798} = 12.8\%$$

C. Beyond the transmon-memory coupling

The example of the transmon-memory coupling controlled by the control unit, i.e. the assembly formed at least by the microwave source 129 and the microwave source 133, has been developed in an exhaustive way in the previous parts A and B. It has thus been demonstrated that the proposed device 1 and calibration method are well suited to such a quantum device controlled by such a control unit.

The skilled person understands that the proposed device 1 and calibration method can be applied to quantum systems other than the transmon-memory coupling, controlled by control units other than the combination of the microwave source 129 and the microwave source 133. In particular, the quantum system to be controlled can be an open or a closed quantum system.

Indeed, the proposed device 1 and calibration method are based on a modelling of the time evolution of a quantum system, on the parameterization of the controls of such a quantum system and on the definition of a loss function which depends on one or more target operating attributes to be achieved by the quantum system and/or the control unit, as well as on the operating parameters of the control unit. Such ingredients can be recovered for several different quantum systems and several different control units. A generalization of the example developed in depth above can thus easily be realized, as is clear from part B.2 above which has a scope that goes far beyond the transmon-memory coupling, the microwave source 129 and the microwave source 133.

**Claims**

1. A device (1) for calibrating a control unit of a quantum system, said device (1) comprising:

   - a memory (5) arranged to store data representing the dynamics of said quantum system, said dynamics depending at least on *n* operating parameters of said control unit, said data including a set of respective initial values of the *n* operating parameters,

the memory (5) being further arranged to store data representing a loss function and a non-zero natural integer *p* less than *n*, said loss function depending on: i) at least one target operating attribute to be reached by the quantum system and/or at least one target operating attribute to be reached by the control unit whilst controlling the quantum system; and ii) the *n* operating parameters,

- a calculator (7) arranged to determine the *p* eigenvectors corresponding respectively to the *p* largest absolute eigenvalues of the Hessian of the loss function at the initial values of the *n* operating parameters, and

- an optimizer (9) arranged to determine a set of respective final values of the *n* operating parameters by optimizing the loss function in a vicinity of the set of respective initial values of the *n* operating parameters explored by linearly combining the *p* eigenvectors, the device (1) being arranged to receive input data representing a set of respective initial values of *n* operating parameters of a control unit on which the dynamics of a quantum system depends, a loss function and a non-zero natural number *p* less than *n*, said loss function depending on: i) at least one target operating attribute to be reached by said quantum system and/or at least one target operating attribute to be reached by the control unit whilst controlling the quantum system; and ii) the *n* operating parameters, to store said input data in the memory (5), to determine output data representing a set of respective final values of the *n* operating parameters to be set for calibrating said control unit of said quantum system, and to return said output data.

2.  The device (1) of claim 1, wherein the optimizer (9) is arranged to determine a set of respective final values of the *n* operating parameters by tuning *p* weighting coefficients to optimize the loss function, said *p* weighting coefficients parametrically varying the *n* operating parameters as follows :

$$\theta = \tilde{\theta}_{\text{init}} + \sum_{j=1}^{p} \alpha_j v_j$$

where: - $\theta = [\theta_1, ..., \theta_n]$ is a vector of the *n* operating parameters $\theta_i$,

- $\tilde{\theta}_{\text{init}} = [\tilde{\theta}_{\text{init},1}, ... , \tilde{\theta}_{\text{init},n}]$ is a vector of the respective initial values $\tilde{\theta}_{\text{init},i}$,
- $\alpha_j$ is the j-th weighting coefficient, and
- $v_j$ is the j-th eigenvector of the *p* eigenvectors.

3.  The device (1) of claim 1 or 2, wherein the calculator (7) is arranged to calculate the Hessian of the loss function at the initial values of the *n* operating parameters and to thereby determine the *p* eigenvectors corresponding respectively to the *p* largest absolute eigenvalues of the Hessian.

4.  The device (1) of one of the preceding claims, wherein said device (1) is arranged to return the output data at least by setting the *n* operating parameters of the control unit to the respective final values.

5.  The device (1) of one of the preceding claims, wherein the memory (5) is arranged to receive input data representing a set of respective initial values of *n* operating parameters on which the dynamics of a density operator of the quantum system governed by a Lindblad master equation depends.

6.  The device (1) of one of the preceding claims, the control unit controlling the quantum system with at least one control signal over a period a time, wherein the memory (5) is arranged to receive input data representing a set of respective initial values of *n* operating parameters of the control unit on which the dynamics of the quantum system depends and of which at least part corresponds to a sampling of said control signal over said period of time.

7.  The device (1) of one of the preceding claims, wherein the memory (5) is arranged to receive input data representing a loss function depending on a target quantum state or a target quantum unitary to be reached by the quantum system and the *n* operating parameters.

8.  The device (1) of claim 7, the quantum system comprising one or more cat qubit resonators each hosting a respective cat qubit, wherein the target quantum state is a combination of one or more respective cat states of said one or more cat qubits to prepare.

9. The device (1) of claim 7, the quantum system comprising one or more cat qubit resonators each hosting a respective cat qubit in a cat state, wherein the target quantum unitary is a quantum gate on individual ones of the cat states or a quantum gate between a plurality of cat states.

10. The device (1) of one of the preceding claims, wherein the memory (5) is arranged to receive input data representing a set of respective initial values determined by applying a gradient descent to a loss function depending on: i) at least one target operating attribute to be reached by the quantum system and/or at least one target operating attribute to be reached by the control unit whilst controlling the quantum system; and ii) $n$ operating parameters of said control unit on which the dynamics of said quantum system depends.

11. The device (1) of one of claims 1 to 9, wherein the memory (5) is arranged to receive input data representing a set of respective initial values corresponding to the respective current values of $n$ operating parameters on which the dynamics of the quantum system depends.

12. A computer-implemented method for calibrating a control unit of a quantum system, said method comprising the following operations:

a) receiving (700) input data representing a set of respective initial values of $n$ operating parameters of said control unit on which the dynamics of said quantum system depends, a loss function and a non-zero natural number $p$ less than $n$, said loss function depending on: i) at least one target operating attribute to be reached by said quantum system and/or at least one target operating attribute to be reached by the control unit whilst controlling the quantum system; and ii) the $n$ operating parameters,
b) determining (730) the $p$ eigenvectors corresponding respectively to the $p$ largest absolute eigenvalues of the Hessian of the loss function at the initial values of the $n$ operating parameters,
c) determining (740) output data representing a set of respective final values of the $n$ operating parameters by optimizing the loss function in a vicinity of the set of respective initial values of the $n$ operating parameters explored by linearly combining the $p$ eigenvectors, and
d) returning (750) said output data.

13. The computer-implemented method of claim 12, further comprising the following preliminary operation: applying a gradient descent to the loss function for determining the set of respective initial values.

14. The computer-implemented method of claim 12 or 13, further comprising at least one additional implementation of operations a), b), c) and d), wherein the set of respective initial values of the $n$ operating parameters used in operation a) of said additional implementation is the set of respective final values of the $n$ operating parameters determined in operation c) of the preceding implementation.

15. A computer program comprising instructions whose execution, by at least one processor, results in the implementation of the computer-implemented method of one of claims 12 to 14.

FIG. 1

FIG. 2

FIG. 3

FIG. 4

(a)

(b)

FIG. 5

FIG. 6

FIG. 7

FIG. 8

(a)

(b)

FIG. 9

## EUROPEAN SEARCH REPORT

**Application Number**

EP 24 30 5019

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N. ANDERS PETERSSON ET AL.: "Discrete Adjoints for Accurate Numerical Optimization with Application to Quantum Control", ARXIV.ORG, CORNELL UNIVERSITY LIBRARY, 201 OLIN LIBRARY CORNELL UNIVERSITY ITHACA, NY 14853, 19 November 2020 (2020-11-19), XP081817341, | 1-7, 10-15 | INV. G06N10/60 G06N10/40 |
| A | * sections 1 to 3, 6 and 7.1 * ----- | 8,9 | |
| A | U. RÉGLADE ET AL.: "Quantum control of a cat-qubit with bit-flip times exceeding ten seconds", ARXIV.ORG, CORNELL UNIVERSITY LIBRARY, 201 OLIN LIBRARY CORNELL UNIVERSITY ITHACA, NY 14853, 13 July 2023 (2023-07-13), XP091562280, * section S3 * ----- | 1-15 | |
| A | M. HOSSEINI ET AL.: "A new eigenvector selection strategy applied to develop spectral clustering", MULTIDIMENSIONAL SYSTEMS AND SIGNAL PROCESSING, SPRINGER US, BOSTON, vol. 28, no. 4, 7 March 2016 (2016-03-07), pages 1227-1248, XP036307650, ISSN: 0923-6082, DOI: 10.1007/S11045-016-0391-6 [retrieved on 2016-03-07] * section 3 * ----- | 1-15 | **TECHNICAL FIELDS SEARCHED (IPC)** <br><br> G06N |

The present search report has been drawn up for all claims

| Place of search | Date of completion of the search | Examiner |
|---|---|---|
| The Hague | 8 July 2024 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23175147

### Non-patent literature cited in the description

- **N. KAHNEJA et al.** Optimal control of coupled spin dynamics: design of NMR pulse sequences by gradient ascent algorithms. *Journal of Magnetic Resonance*, February 2005, vol. 172 (2), 296-305
- **S. KRASTANOV et al.** Universal Control of an Oscillator with Dispersive Coupling to a Qubit. *Physical Review Applied*, 2015, vol. 92, 0403031
- **R. W. HEERES et al.** Cavity State Manipulation Using Photon-Number Selective Phase Gates. *Physical Review Letters*, 2015, vol. 115, 137002
- **M. KUDRA et al.** Robust preparation of Wigner-Negative States with Optimized SNAP-Displacement Sequences. *PRX Quantum*, 2022, vol. 3, 030301
- **M. WERNINGHAUS et al.** Leakage reduction in fast superconducting qubit gates via optimal control. *npj Quantum Information*, 2021, vol. 7, 14
- **P. CERFONTAINE et al.** Closed-loop control of a GaAs-based single-triplet spin qubit with 99.5% gate fidelity and low leakage. *Nature Communications*, 2020, vol. 11, 4144
- **NDRE R. R. CARVALHO et al.** Error robust quantum logic optimization using a cloud quantum computer interface. *Physical Review Applied*, 2021, vol. 15, 064054
- **Y. BAUM et al.** Experimental Deep Reinforcement Learning for Error-Robust Gate-Set Design on a Superconducting Quantum Computer. *PRX Quantum*, 2021, vol. 2, 040324
- **V. V. SIVAK et al.** Real-time quantum error correction beyond break-even. *Nature*, 2023, vol. 616, 50-55
- **R. LESCANNE et al.** Exponential suppression of bit-flips in a qubit encoded in an oscillator. *Nature Physics*, 2020